# EUROPEAN PATENT APPLICATION

(11) **EP 4 049 571 A2**
(43) Date of publication of application: **31.08.2022**
(21) Application number: 22158926.0
(22) Date of filing: 25.02.2022
(51) Int. Cl.: A47L 9/04, A47L 9/30, A47L 9/28, A47L 5/36, A47L 9/24, A47L 9/32

(54) **VACUUM ACCESSORY TOOL WITH FLUID-POWERED LIGHT SOURCE**

(30) Priority: 25.02.2021 US 202163153780 P
(71) Applicant: Techtronic Cordless GP, Anderson, SC 29621 (US)
(72) Inventor: KNIGHT, Tyler H., Anderson, 29621 (US)
(74) Representative: Novagraaf Group

(57) **Abstract**

A vacuum accessory tool is provided. The vacuum accessory tool includes a body, a turbine, a generator, and a light source. The body defines a suction inlet, a fluid outlet, and a fluid flow path extending from the suction inlet to the fluid outlet. The turbine is rotatably mounted to the body in fluid communication with the fluid flow path to be rotated by fluid passing through the fluid flow path. The generator is coupled to the turbine such that rotation of the turbine rotates the shaft to generate power. The light source is electrically coupled to the generator and configured to receive the power generated by the generator to power the light source by the fluid passing through the fluid flow path.

## Description

### FIELD OF THE INVENTION

The present invention relates to accessory tools for vacuum cleaners, and more particularly to fluid-powered vacuum cleaner accessory tools.

### BACKGROUND OF THE INVENTION

Vacuums typically include impeller units which generate suction fluid flow into a separator which separates suction debris from an airflow. Vacuums include dirty fluid inlets in fluid communication with the impeller unit to direct dirty fluid from work surfaces and into the separator. Occasionally, dirty fluid inlets are provided by hoses coupled to the separator. Suction nozzle attachments are attached the separator or to the hose opposite the separator. The suction nozzle attachments are movable into tight dimly lit spaces to access work surfaces.

### SUMMARY OF THE INVENTION

The disclosure provides, in one aspect, a vacuum accessory tool including a body, a turbine, a generator, and a light source. The body defines a suction inlet and a fluid outlet. The body defines a fluid flow path extending from the suction inlet to the fluid outlet. The turbine is rotatably mounted to the body in fluid communication with the fluid flow path to be rotated by fluid passing through the fluid flow path. The generator is coupled to the turbine such that rotation of the turbine rotates the generator to generate power. The light source is electrically coupled to the generator and configured to receive the power generated by the generator to power the light source by the fluid passing through the fluid flow path.

The disclosure provides, in another independent aspect, a vacuum cleaner comprising a vacuum cleaner accessory tool, a vacuum cleaner inlet, a separator, a clean air outlet, a motor, and an impeller. The vacuum cleaner accessory tool includes a body, a turbine, a generator, and a light source. The body defines a suction inlet and an accessory fluid outlet. The body defines a fluid flow path extending from the suction inlet to the accessory fluid outlet. The turbine is rotatably mounted to the body in fluid communication with the fluid flow path to be rotated by fluid passing through the fluid flow path. The generator is coupled to the turbine such that rotation of the turbine rotates the generator to generate power. The light source is electrically coupled to the generator and configured to receive the power generated by the generator to power the light source by the fluid passing through the fluid flow path. The vacuum cleaner inlet is coupled to the accessory fluid outlet. The separator is in fluid communication with the vacuum cleaner inlet, the separator being configured to separate debris from clean air. The clean air outlet is in fluid communication with the separator downstream of the vacuum cleaner inlet. The motor and the impeller are configured to generate suction to move fluid along the fluid flow path and through the vacuum cleaner inlet, the separator, and the clean air outlet.

Other features and aspects of the invention will become apparent by consideration of the following detailed description and accompanying drawings.

### BRIEF DESCRIPTION OF THE DRAWINGS

FIG. 1 is an exploded view of a vacuum cleaner with an accessory tool attached to the vacuum cleaner.
FIG. 2 is a cross-sectional view taken along section line 2-2 in FIG. 1.
FIG. 3 is an exploded view of the accessory tool of FIG. 1.

Before any embodiments of the invention are explained in detail, it is to be understood that the invention is not limited in its application to the details of construction and the arrangement of components set forth in the following description or illustrated in the following drawings. The invention is capable of other embodiments and of being practiced or of being carried out in various ways.

### DETAILED DESCRIPTION

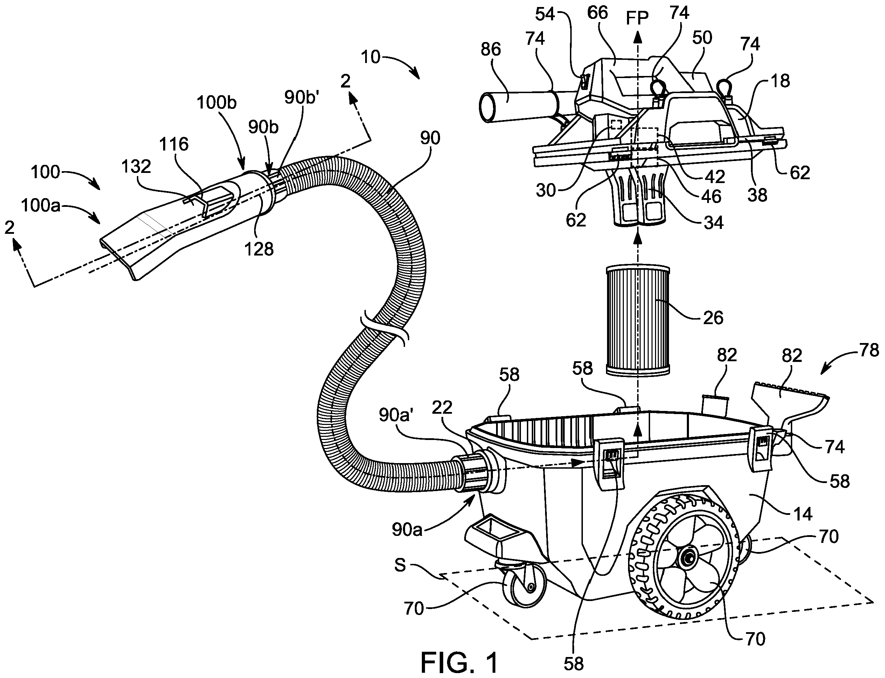

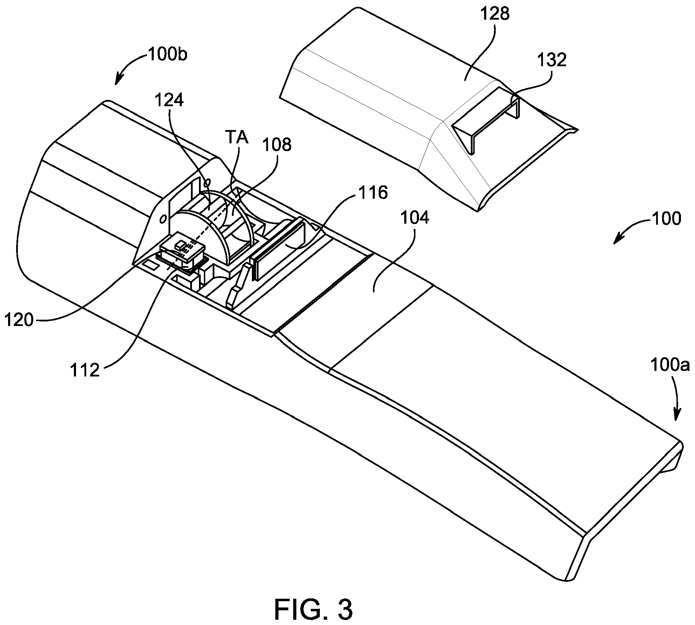

FIG. 1 illustrates a vacuum cleaner 10 configured to be coupled to a vacuum cleaner accessory tool 100 (i.e., an "accessory tool"). As will be described in detail below, the accessory tool 100 includes a body 104, a fluid-powered turbine 108 (FIG. 3), a generator 112 (FIG. 3) coupled to the turbine 108 (FIG. 3), and a light source 116 (FIG. 1) electrically coupled to the generator 112 and configured to receive power from the generator 112 as fluid passes along a fluid flow path FP in communication with the turbine 108. Accordingly, the accessory tool 100 provides a fluid-powered light source 116. As will be described in detail below, the accessory tool 100 is selectively coupled to the vacuum cleaner 10.

With continued reference to FIG. 1, the vacuum cleaner 10 includes a base 14 and a lid 18 selectively removable from the base 14. The vacuum cleaner 10 includes a vacuum cleaner inlet 22, a separator 26, and a clean air outlet 30. The vacuum cleaner inlet 22 is provided on the base 14. The separator 26 is removably (i.e., selectively) coupled to the lid 18 of the vacuum cleaner 10. The separator 26 is in fluid communication with the vacuum cleaner inlet 22 and is configured to separate debris (e.g., solid debris and/or liquid working liquid) from clean air. The clean air outlet 30 is in fluid communication with the separator 26 opposite the vacuum cleaner inlet 22 such that the clean air that passes through the separator 26 is exhausted through the clean air outlet 30 to the surroundings of the vacuum cleaner 10. In the illustrated embodiment, the separator 26 is a filter which is removably coupled to a filter receptacle 34 of the lid 18. The illustrated vacuum cleaner 10 is a wet/dry vacuum cleaner operable to vacuum solid debris and/or liquid working fluid. Optionally, a seal 38 is provided between the base 14 and the lid 18. Other arrangements of the vacuum cleaner 10 are possible.

The vacuum cleaner 10 includes a motor 42 and an impeller 46 coupled to the motor 42. The motor 42 and the impeller 46 are configured to generate suction to move fluid through the fluid flow path FP. The fluid flow path FP extends through the vacuum cleaner inlet 22, the separator 26, and out the clean air outlet 30 to the surroundings of the vacuum cleaner 10. In the illustrated embodiment, the illustrated motor 42 and impeller 46 are coupled to the lid 18. Other locations of the motor 42 and impeller 46 are possible.

The motor 42 is powered by a power source 50. The illustrated power source 50 is a battery pack which is selectively coupled to the vacuum cleaner 10. More specifically, the illustrated power source 50 is selectively coupled to the lid 18. The illustrated vacuum cleaner 10 further includes a power switch 54 coupled to the power source 50 and the motor 42 to selectively transmit power from the power source 50 to the motor 42. When activated by the power switch 54, the power source 50 is configured to power the motor 42 and the impeller 46 to move fluid along the fluid flow path FP. In the illustrated embodiment, the power switch 54 is provided on the lid 18, and the battery pack (e.g., the power source 50) is selectively coupled to the lid 18. Other arrangements or locations of the power source 50 and the power switch 54 are possible.

The illustrated power source 50 is an 18 V battery pack. Other power sources 50 may include battery packs of differing voltages. In other embodiments, the power source 50 may be provided as a plug for receiving alternating current.

With continued reference to FIG. 1, the base 14 includes a latch 58, and the lid 18 includes a latch receiver 62. Once the lid 18 is supported upon the base 14, the latch 58 is actuated to engage the latch receiver 62 to secure the lid 18 to the base 14. The illustrated vacuum cleaner 10 includes a plurality of latches 58 and a plurality of latch receivers 62 to secure the lid 18 to the base 14.

The lid 18 includes a handle 66, and the base 14 includes a wheel 70. A user operating the vacuum cleaner 10 may grasp the handle 66 or another portion of the vacuum cleaner 10 to translate the vacuum cleaner 10 along a surface S towards a portion of the surface S that needs to be cleaned. The illustrated embodiment includes a plurality of wheels 70. The wheels 70 are rotatably secured to the base 14 such that the wheels 70 are configured to slide the vacuum cleaner 10 along the surface S. Some of the wheels 70 may be caster wheels. Otherwise, the user may grasp the handle 66 or another portion of the vacuum cleaner 10 to lift the vacuum cleaner 10 from the surface S to move the vacuum cleaner 10 to the portion of the surface S that needs to be cleaned.

The vacuum cleaner 10 includes at least one accessory connector 74. The accessory connector 74 is configured to mechanically secure an accessory 78 of the vacuum cleaner 10 to the vacuum cleaner 10. The accessory 78 may be a suction nozzle 82, an extension tube 86, a flexible hose 90, the accessory tool 100, or the like. The accessory connector 74 may secure the accessory 78 to the vacuum cleaner 10 during use or for storage of the accessory 78 on the vacuum cleaner 10 while the accessory 78 is not in use with the vacuum cleaner 10. The illustrated embodiment includes a plurality of accessory connectors 74. The accessory connectors 74 may be provided on either or both of the base 14 and the lid 18. In the illustrated embodiment, the accessory connectors 74 are provided as bungee cords. Other accessory connectors 74 are possible to secure accessories 78 to the vacuum cleaner 10.

The illustrated base 14 functions as a collector to receive solid debris and/or liquid working fluid which is separated by the separator 26. In the illustrated embodiment, the base 14 defines a collector volume of approximately 6 gallons. Other similar vacuum cleaners 10 may have dedicated collectors which may define other collector volumes. For example, other vacuum cleaners 10 may define collector volumes of, for example, 1 gallon, 3 gallons, 4.75 gallons, 5 gallons, or the like.

With continued reference to FIG. 1, the hose 90 includes a first end 90a with a connector 90a'. The hose 90 further includes an opposite second end 90b with a connector 90b'. The connector 90a' may be secured to the vacuum cleaner inlet 22. This effectively moves the inlet of the vacuum cleaner 10 to the second end 90b of the hose 90. The connector 90b' may be secured to the accessory tool 100. The connectors 90a', 90b' are removably secured to the vacuum cleaner inlet 22 and the vacuum accessory tool 100, respectively. This permits assembly and disassembly of the vacuum cleaner 10 for storage or transport. The accessory tool 100 includes a fluid outlet 100b (i.e., an accessory fluid outlet 100b) and an upstream suction inlet 100a. The connector 90b' may be secured to the fluid outlet 100b of the accessory tool 100. This effectively moves the inlet of the vacuum cleaner 10 to the suction inlet 100a of the accessory tool 100. As such, the vacuum cleaner inlet 22 is coupled to the fluid outlet 100b (i.e., the accessory fluid outlet 100b) of the accessory tool 100. When the hose 90 is secured to the vacuum cleaner inlet 22 and the vacuum accessory tool 100, the fluid flow path FP thus extends from the suction inlet 22 of the vacuum accessory tool 100, through the hose 90, and into the vacuum cleaner inlet 22.

While connected to the vacuum cleaner inlet 22 via the flexible hose 90, the accessory tool 100 is movable along the surface S into proximity to the portion of the surface S that needs to be cleaned. This affords a range of motion for the accessory tool 100 to move relative to the base 14 and the lid 18.

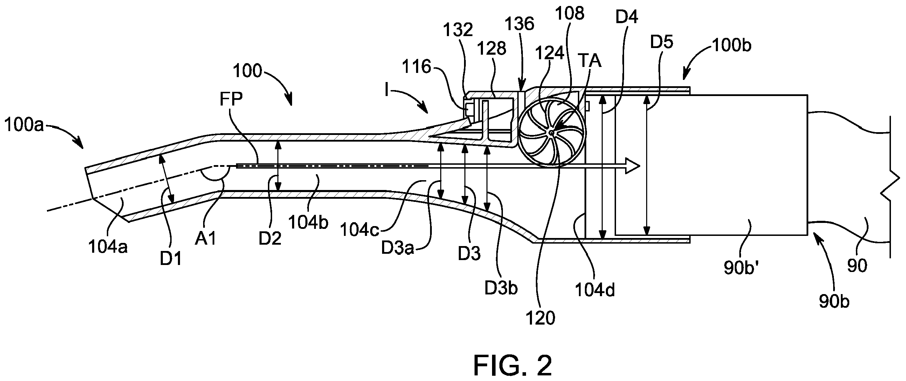

As illustrated in FIGS. 2 and 3, the accessory tool 100 includes the body 104, the turbine 108, the generator 112, and the light source 116. With reference to FIG. 2, the body 104 defines the suction inlet 100a and the fluid outlet 100b, with the fluid flow path FP extending from the suction inlet 100a to the fluid outlet 100b. The body 104 includes an inlet portion 104a, an intermediate portion 104b, and an expansion portion 104c, and a connection portion 104d. The inlet portion 104a is adjacent the suction inlet 100a. The intermediate portion 104b is positioned between the inlet portion 104a and the expansion portion 104c. The intermediate portion 104b is angled at an angle A1 relative to the inlet portion 104a. The connection portion 104d is provided on the opposite side of the expansion portion 104c as the intermediate portion 104b. In other words, the connection portion 104d is adjacent the expansion portion 104c and the fluid outlet 100b of the vacuum cleaner accessory tool 100. The connection portion 104d is configured to couple the vacuum cleaner accessory tool 100 to the vacuum cleaner 10. As discussed above, the vacuum cleaner 10 is operable to generate fluid flow through the fluid flow path FP. More specifically, the connection portion 104d is configured to couple the vacuum cleaner accessory tool 100 to the connector 90b' of the hose 90.

With continued reference to FIG. 2, the inlet portion 104a defines a dimension D1 generally corresponding to the cross-sectional height thereof. Similarly, the intermediate portion 104b defines a dimension D2 corresponding to the cross-sectional height thereof. The dimensions D1 and D2 are generally constant along the length of the inlet portion 104a and intermediate portion 104b, respectively. The expansion portion 104c defines a dimension D3 corresponding to the cross-sectional height thereof. As illustrated in FIG. 2, the dimension D3 varies along the length of the expansion portion 104c between the intermediate portion 104b and the connection portion 104d. More specifically, the dimension D3 increases along the fluid flow path FP. A dimension D3a illustrates a cross-sectional height of the expansion portion 104c at a first position along the flow path FP. A dimension D4b illustrates a cross-sectional height of the expansion portion 104c at a second position along the flow path FP, the second position being further along the flow path FP than the first position. The dimension D3b is larger than the dimension D3a. Accordingly, the expansion portion 104c increases in size along the fluid flow path FP. Similarly, the connection portion 104d defines a dimension D4 corresponding to the cross-sectional height thereof. Finally, the connector 90b' defines a dimension D5 corresponding to the cross-sectional height thereof. The dimension D4 is greater than the dimension D5 such that the connector 90b' can be received within the connection portion 104d. Other arrangements to secure the connection portion 104d to the connector 90b' are possible.

The turbine 108 is a fluid-powered turbine 108, and is coupled to a shaft 120. The turbine 108 is rotatably mounted to the body 104 in fluid communication with the fluid flow path FP. The turbine 108 can thus be rotated by fluid passing through the fluid flow path FP. As shown in FIG. 2, the illustrated turbine 108 is positioned adjacent the expansion portion 104c and the connection portion 104d. The shaft 120 is oriented along a turbine axis TA. The turbine axis TA being oriented transverse to the fluid flow path FP. More specifically, the illustrated turbine axis TA extends perpendicular to the fluid flow path FP. The illustrated turbine 108 is an impulse turbine including a plurality of vanes 124. The plurality of vanes 124 rotate the turbine 108 and thus the shaft 120 upon fluid flow providing pressure against at least one of the plurality of vanes 124.

As best illustrated in FIG. 3, the generator 112 is coupled to the shaft 120. In other words, the generator 112 is coupled to the turbine 108 by the shaft 120. Accordingly, rotation of the turbine 108 rotates the shaft 120, and the shaft 120 rotates the generator 112 to generate power. The generator 112 is configured to convert rotational kinetic energy of the shaft 120 into electrical energy for use by the light source 116. Rotation of the turbine 108 rotates the shaft 120 to generate power.

The light source 116 is electrically coupled to the generator 112 to receive the power generated by the generator 112. The power generated by the generator 112 is then used to power the light source 116. Accordingly, kinetic energy (i.e., power) is transferred from the fluid passing through the fluid flow path FP into rotational kinetic energy of the turbine 108 and the shaft 120, and the generator 112 converts the rotational kinetic energy of the turbine 108 and the shaft 120 into electrical energy to power the light source 116. The light source 116 is coupled to the body 104. The light source 116 is directed toward the suction inlet (i.e., an inlet end) 100a of the accessory tool 100. Accordingly, when fluid passes through the fluid flow path FP, the turbine 108 and shaft 120 are rotated to power the generator 112, and the generator 112 powers the light source 116 to emit light onto a portion of the surface S that needs to be cleaned. The light source 116 may provide light to tight dimly lit spaces along the surface S so that the user can adequately see the surface S. With the light source 116 receiving power from the fluid from the fluid flow path FP, the need for a wired connection between the light source 116 on the attachment 100 and the power source 50 via the hose 90 is eliminated. The accessory tool 100 does not receive electrical power from the power source 50. However, the turbine 108 and the generator 112 are configured to convert kinetic energy from passing through the fluid flow path FP into electrical energy to power the light source 116. The light source 116 simply is activated (i.e., turned ON) when fluid passes through the fluid flow path FP.

In the illustrated embodiment, a cover 128 is selectively removable from the body 104. As illustrated in FIG. 2, an interface I between the cover 128 and the body 104 may include a press-fit connection. Accordingly, the cover 128 may be removed from the body 104 upon receiving sufficient separating force. The cover 128 at least partially encloses the turbine 108 relative to the body 104 and with respect to the surroundings of the accessory tool 100. The cover 128 includes a cutout 132. The cutout 132 is dimensioned with a shape corresponding to the shape of the light source 116. When the cover 128 is secured to the body 104, the cutout 132 is aligned with the light source 116 such that when the light source 116 is powered, light passes through the cutout 132.

In the illustrated embodiment of FIG. 2, the cover 128 defines an opening 136. The opening 136 is positioned adjacent the turbine 108. The opening 136 is in fluid communication with the surroundings of the accessory tool 100. The opening 136 is defined as a small hole such that when the inlet end 100a of the accessory tool 100 is blocked, the opening 136 provides access to the surroundings of the accessory tool 100 without requiring passage of the fluid flow path FP through the inlet end 100a. Accordingly, air can pass through an auxiliary fluid flow path passing through the opening 136, providing fluid flow to power the turbine 108, and passing fluid to the fluid outlet 100b and ultimately to the impeller 46 and out the clean air outlet 30. The opening 136 is dimensioned small enough such that suction is not lost through the inlet end 100a during normal use when the inlet end 100a is not entirely blocked by debris.

Various features of the invention are set forth in the following claims.

## Claims

1. A vacuum cleaner accessory tool comprising:
a body defining a suction inlet and a fluid outlet, the body defining a fluid flow path extending from the suction inlet to the fluid outlet,
a turbine rotatably mounted to the body in fluid communication with the fluid flow path to be rotated by fluid passing through the fluid flow path,
a generator coupled to the turbine such that rotation of the turbine rotates the generator to generate power, and
a light source electrically coupled to the generator and configured to receive the power generated by the generator to power the light source by the fluid passing through the fluid flow path.

2. The vacuum cleaner accessory tool of claim 1, further comprising a cover selectively removable from the body.

3. The vacuum cleaner accessory tool of claim 2, wherein the cover at least partially encloses the turbine relative to the body.

4. The vacuum cleaner accessory tool of claim 2, wherein the light source is coupled to the body and the cover includes a cutout aligned with the light source such that when the light source is powered, light passes through the cutout.

5. The vacuum cleaner accessory tool of claim 1, wherein the light source is coupled to the body and is directed towards the suction inlet.

6. The vacuum cleaner accessory tool of claim 1, wherein the body includes an inlet portion adjacent the suction inlet and an expansion portion adjacent the inlet portion, the expansion portion increasing in size along the fluid flow path.

7. The vacuum cleaner accessory tool of claim 6, wherein the expansion portion is angled relative to the inlet portion.

8. The vacuum cleaner accessory tool of claim 6, wherein the turbine is positioned adjacent the expansion portion.

9. The vacuum cleaner accessory tool of claim 6, wherein the body further includes a connection portion adjacent the expansion portion and the fluid outlet, the connection portion being configured to couple the vacuum cleaner accessory tool to a vacuum cleaner operable to generate fluid flow through the fluid flow path.

10. The vacuum cleaner accessory tool of claim 1, wherein the turbine includes a shaft oriented along a turbine axis, the turbine axis being oriented transverse to the fluid flow path, wherein rotation of the shaft rotates the generator to generate power.

11. The vacuum cleaner accessory tool of claim 10, wherein the turbine is an impulse turbine including a plurality of vanes which rotate the shaft upon the fluid flow providing pressure against the vane.

12. A vacuum cleaner comprising:
a vacuum accessory tool comprising
a body defining a suction inlet and an accessory fluid outlet, the body defining a fluid flow path extending from the suction inlet to the accessory fluid outlet,
a turbine rotatably mounted to the body in fluid communication with the fluid flow path to be rotated by fluid passing through the fluid flow path,
a generator coupled to the turbine such that rotation of the turbine rotates the generator to generate power, and
a light source electrically coupled to the generator and configured to receive the power generated by the generator to power the light source by the fluid passing through the fluid flow path
a vacuum cleaner inlet coupled to the accessory fluid outlet,
a separator in fluid communication with the vacuum cleaner inlet, the separator configured to separate debris from clean air,
a clean air outlet in fluid communication with the separator downstream of the vacuum cleaner inlet, and
a motor and an impeller configured to generate suction to move fluid along the fluid flow path and through the vacuum cleaner inlet, the separator, and the clean air outlet.

13. The vacuum cleaner of claim 12, further comprising a power source selectively coupled to the vacuum cleaner, the power source being configured to power the motor and the impeller to move fluid along the fluid flow path.

14. The vacuum cleaner of claim 13, wherein the accessory tool does not receive power from the power source.

15. The vacuum cleaner of claim 14, wherein the turbine and the generator convert kinetic energy from fluid passing through the fluid flow path into electrical energy to power the light source.

16. The vacuum cleaner of claim 13, further comprising a base and a lid selectively removable from the base, wherein the power source is selectively coupled to the lid.

17. The vacuum cleaner of claim 12, wherein the vacuum cleaner includes an accessory connector configured to mechanically secure the vacuum accessory tool to the vacuum.

18. The vacuum cleaner of claim 12, further comprising a hose having a first end and an opposite second end, the first end of the hose being secured to the vacuum cleaner inlet, the second end of the hose being secured to the vacuum accessory tool such that the fluid flow path extends from the suction inlet of the vacuum accessory tool, through the hose, and into the vacuum cleaner inlet.

19. The vacuum cleaner of claim 18, wherein the first end and the second end have connectors which are removably secured to the vacuum cleaner inlet and the vacuum accessory tool, respectively.

20. The vacuum cleaner of claim 12, wherein the light source is coupled to the body and is directed towards the suction inlet.
